# EUROPEAN PATENT SPECIFICATION

(11) **EP 0 426 901 B1**
(45) Date of publication and mention of the grant of the patent: **16.03.1994**
(21) Application number: 89120919.9
(22) Date of filing: 10.11.1989
(51) Int. Cl.: B60D 1/18, B61G 9/04, B63B 21/56

(54) **Two way shock proof and absorbing towing coupling**
Zweiwegige stossfeste und stossabsorbierende Schlepperkupplung
Dispositif d'accouplement à double effet pour remorquage résistant aux chocs et absorbant les chocs

(43) Date of publication of application: 15.05.1991
(73) Proprietor: Zhao, Zhendong, Yuetan Beijing (CN)
(72) Inventor: Zhao, Zhendong, Yuetan Beijing (CN)
(74) Representative: Goddar, Heinz J., Dr.

(56) References cited:
- BE-A- 654 082
- FR-A- 2 259 992
- US-A- 2 023 527
- US-A- 3 649 048
- US-A- 4 385 754

## Description

This invention relates to coupling means provided between towing combination vehicles in water and land transportation, more particularly, to a two way shock proof and absorbing towing coupling according to the preamble of claim 1 (US-A 2,023,527).

### BACKGROUND OF THE INVENTION

During the motion of transportation facilities, shock-vibration is the most detrimental to cause a mechanical structure to be loose, to have a short service life and even to be damaged. However, the problem of alternative two way shock-vibration along an axis of towing combination vehicles has not been solved simply and reliably until this invention is presented. One way buffer, therefore, cannot but to be used in the towing means of train, nine-haul truck, common truck, etc. Such one way buffer only provides time lag for starting, which is necessary in the starting process of towing combination vehicles, but it can not eliminate the great inverse shock caused by braking, especially emergency braking, and moving down along a slope, which affects seriously the service life and safety of transportation facilies.

It is well known that because only one way shockproof buffer, which is effective when starting, is provided between railway carriages, great inverse shock will be caused by slight braking during motion, and summerization of great shocks between railway carriages caused by emergency braking or bumping of trains and in other situations will result in turning carriages over and in injuries and deaths of passangers. Such serious accidents have been repeatedly met with in the transportation in the world.

The application of the two way shock proof and absorbing towing coupling enables the carriages not to be turned over when bumping, even in serious accidents, so as to decrease injuries and deaths, and reduce the lose, and may eliminate shock-vibration resulted from braking and running, so as to ensure smooth and steady motion, and increase service life of trains.

Combination vehicles for highway transportation is an ideal way of transportation However, if one way buffer is still used as the towing coupling of said combination vehicles, such combination vehicles can't work normally because of the inverse shock of the towed vehicles on the leading vehicle and the bumping between the towed vehicles. Therefore, the key problem of that there have not been combination vheicles used as a real transportation tools for highway transportation so far is the technique of two way shock proof and absorbing towing coupling has not been provided.

Rope connection has long been used in towing of ship. Some factors, such as wind-wave and variation of ship speed, result in speed difference and great and frequent two way shock between towboats. The shock stress is very great although some shockproof means, such as palm fibre packages, used tyres, and the like, are provided on ends of towboats. In order to decrease or buffer the bumping, distance between towboats should be enlarged. Thus, towing efficiency is decreased, and the energy is wasted. Therefore, two way shockproof is also a key problem to be solved pressingly in water towing transportation. While the boat anchors, a general method is to tie it to piles by ropes. For a big ship, complex facilities, such as the winch and steel cable, and heavy labour operations are necessary. Because of the great inertia, long and large ship body, and shake of the ship, the ship bumps the wharf violently. Although shockproof means, such as hanging pads made of bundles of rubber belts are used, the great bumping stress still results in the deformation of the ship body on its both sides. Therefore, one of difficult technical problems which need to be solved urgently for anchoring of ships and boats is how to solve thoroughly the two way shock which may cause disconnection and how to simplify the facilities for anchoring.

To sum up, once two way shock proof and absorbing for towing transportation of various combination vehicles is solved, efficiency and benefit of transportation and service life and safety of transportation facilities will be increased greatly.

US-A-2023527 discloses a two way shock proof and absorbing towing coupling comprising casing assembly and compression spring, the opposed members of the casing assembly being slidable relative to each other. However, such a coupling is easy to be damaged since a plurality of slide fittings are used in the apparatus.

### SUMMARY OF THE INVENTION

The objective of the present invention is to solve simply and reliably the problem existing in prior art to provide a towing coupling for combination vehicles so as to increase transportation ability and save energy.

In order to realize the above mentioned objective, the present invention provides a two way shock proof and absorbing towing coupling, comprising the features of claim 1.

Preferably, said two planar chain holders are connected by four pairs of chain means.

The axes of the lug holes of said planar chain holders may be parallel or perpendicular to the radial of said planar chain holders.

Preferably, said arm of a towing frame is spaced with correspondent arm of another frame by an angle of 90°.

The invention will now be described by way of example only and with reference to the accompanying drawings, wherein:
Fig. 1 is a partially sectional plan view of coupling according to one form of the present invention; and
Fig. 2 is a perspective view of the coupling of the present invention as shown in Fig. 1.

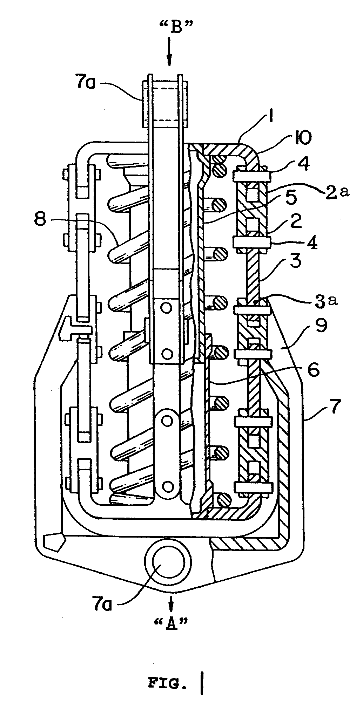

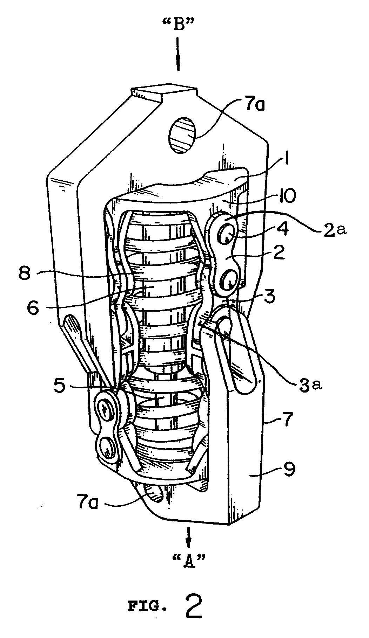

The towing coupling of this invention comprises two planar chain holders 1; at least four pairs of chain means, each of which comprises of two chain sections, each chain section having a plate link 3 and a joint 2 connected by pin 4; a piston sleeve means 5, 6; two towing frames 7 for connecting with two vehciles; at least one shock proof bearing spring 8, etc. It can be seen from attached drawings, Figures 1 and 2.

One end of piston 5 is inserted into sleeve 6, and shoulders at their other ends are respectively fitted in the center holes of the two planar chain holders 1, shock proof bearing spring 8 spirally surrounds the piston-sleeve means 5, 6, two ends of the spring 8 are in touch with the inner surface of the two planar chain holders 1 respectively, the other end 2a of each joint 2 of the chain means is connected with the hole of a respectively lug protruded from the planar chain holder 1, the other ends 3a of plate links 3 of the chain means are respectively connected with towing frames 7 by respective pins 4 each fixed in both holes in one plate link 3 and in one arm 9 of the towing frame 7. This forms the two way shockproof and absorbing coupling of the present invention, wherein toggle-action may be made by the chain means, and lugs 10 of the planar chain holders 1 and by chain means and towing frames 7.

While the towing frames 7 are pulled in opposite directions by taking two shaft holes 7a on the two towing frames 7 as bearing points for load, chains means outside of arms 9 of towing frames 7 is forced, and two planar chain holders 1 connected respectively with said chain means are pressed towards the center. Thus, shockproof bearing spring 8 between the two planar chain holders 1 is pressed and is still in working condition, and chains means inside of the arms 9 of the two towing frames 7 bend for there is no force acting on them. While the pull force acting on the bearing points of towing frames 7 is instantaneously changed to a push one (or shock) towards center, chain sections inside of arms 9 of towing frames 7, from the unforced state to a forced one, pull respectively the connected planar chain holders 1 to move towards the center, the pressed condition of shockproof bearing spring 8 is change to an unforced condition, and then to the pressed condition again. The forced condition of chain means outside of arms 9 of towing frames 7 is then changed to the unforced bending condition. Therefore, while the condition of the towing couplings 7 is changed instantaneously from the pulled condition to the pressed condition, the shockproof bearing springs 8 still work in the pressed condition. During the change of the force, there is no shock causing disconnection, and the combination vehicles can bear the load safely and reliably, and absorb vibration caused by shock. Each pair of chain means bears no shock causing disconnection and can work safely and reliably during the change process of force.

An embodiment of the two way shock proof and absorbing coupling of the present invention is one used in truck combination vehicles (A,B) for highway transportation, in which a truck of model Dong-Feng 140 made in China is used as the leading vehicle and connects two towed vehicles by the couplings of the present invention. After experiments of transporting coal have been made with the above-mentioned combination vehicles on highway, good results have been obtained as follows:
1. The total loading of the combination vehicles is about 22 ± 1 tons and it is increased by one thirds.
2. The behaviours of said truck combination vehicles during starting and turning are similar to those of single vehicle; there is no vibration caused by time lag while starting and driving back, and the minimum turning radius is about 6 meters.
3. Driver and passengers have no feeling of inverse shock while the truck's brake is applied suddenly or driving down along slope, and the safety distance needed for bracking of said truck combination vehicles in an emergency substantially equals that needed for braking of single vehicle. The safety and stability of transportation are improved.
4. The adaptability of said truck combination vehicles to the slope variations, curvature and layer of mud of highway, and bearing strength of bridges are similar to those of single vehicle. Besides, the truck combination vehicles may not affect the normal traffic and transportation on the highway.
5. The said truck combination vehicles can be driven over road with a maximum slope of about 25°, which is in conformity with the general demand on the vehicle driving on slope.

It has been calculated that about 20-25% energy can be saved through using the coupling of the present invention, and that an increment of about 45% income can be made by using the truck combination vehicles connected with the couplings of the present invention. Using truck combination vehicles is an effective way to save energy, to increase the transportation ability and to solve the problem of heavy and busy transportation. More economic benefits may be brought about as it is widely used.

### ADVANTAGE OF THE INVENTION

The advantage of the invention lies in that:
it is easy to design and make various models and series of two way shockproof and absorbing towing coupling of the present invention according to the demands of different towing combination vehicles for land, water or air transportation, and for military or civilian transportation. Since the towing frame, planar chain holder, spring and chain means are common and simple mechanical parts, their processings are well known. The towing coupling of the present invention can be produced in batches, and forms complete sets with various transportation and towing means.

For any kinds of towing combination vehicles in transportation, the two way shock proof and absorbing towing coupling of the present invention can assure time lag necessary for smooth starting, and absorb shock-vibration between combination vehicles during starting, and absorb effectively vibration caused by tossing or series connection during the motion, and absorb inverse shock caused by the rear vehicle bumping the front one during speeding down, braking, and moving down along a slope.

The present invention enables the truck towing vehicles to be real transportation tool, the energy source to be saved and transportation efficiency to be increased, and the cost of truck transportation to be reduced to correspond to the cost of railway transportation, thus enabling the advantages of truck transportation (great flexibility, wide adaptability) to be well exerted.

## Claims

1. A two-way shock proof and absorbing towing coupling comprising two towing frames (7) for connecting with two adjacent vehicles (A, B), at least one compression spring (8) and a casing accomodating said spring (8), characterized in that each of said towing frames (7) includes at least two arms (9), and said casing comprises two mutually opposed chain holders (1), each chain holder (1) having at least four spaced lugs (10); at least four pairs of chain means (2, 3, 3, 2), each pair of chain means (2, 3, 3, 2) including two chain sections (2, 3), each chain section (2, 3) having a plate link (3) and a joint (2) connected by a pivot pin (4), first ends (2a) of each of said chain sections (2, 3) being connected to opposite lugs (10) on opposite chain holders (1) by pivot pins (4), respectively, second ends (3a) of each of chain sections (2, 3) being pivotaly connected with each of said arm (9), and said spring (8) being provided between said chain holders (1) and being coaxial with said two towing frames (7), opposing ends of said spring (8) abutting against and between inner surfaces of said chain holders (1), respectively.

2. The two-way shock proof and absorbing towing coupling according to claim 1, wherein said two chain holders (1) are connected by four pairs of chain means (2, 3, 3, 2).

3. The two-way shock proof and absorbing towing coupling according to claim 1, wherein said at least two arms (9) of one of the towing frames (7) are spaced from arms (7) of another towing frame (7) by an angle of 90°.

4. The two-way shock proof and absorbing towing coupling according to claim 1, further including a piston-sleeve assembly comprising a piston (5) and a sleeve (6) and extending between said holders, wherein said spring (8) substantially surrounds said piston-sleeve assembly.

## Patentansprüche

1. Zweiwegige stoßfeste und stoßabsorbierende Schlepperkupplung mit zwei Zugrahmen (7) zur Verbindung mit zwei benachbarten Fahrzeugen (A, B), wenigstens einer Stützfeder (8) und einem die Feder (8) aufnehmenden Gehäuse, dadurch gekennzeichnet, daß jeder der Zugrahmen (7) wenigstens zwei Arme (9) umfaßt, und das Gehäuse zwei gegeneinander wirkende Kettenhalter (1) enthält, wobei jeder Kettenhalter (1) wenigstens vier beabstandete Ansätze (10) enthält; wenigstens vier Paare von Kettenmitteln (2, 3, 3, 2), wobei jedes Paar von Kettenmitteln (2, 3, 3, 2) zwei Kettenabschnitte (2, 3) beinhaltet, jeder Kettenabschnitt (2, 3) ein Plattenglied (3) und ein Verbindungselement (2) enthält, die durch einen Schwenkstift (4) verbunden sind, wobei erste Enden (2a) jedes der Kettenabschnitte (2, 3) mit entgegengesetzten Ansätzen (10) an gegenüberliegenden Kettenhaltern (1) durch Schwenkstifte (4) jeweils verbunden sind, zweite Enden (3a) jedes der Kettenabschnitte (2, 3) schwenkbar mit jedem der Arme (9) verbunden sind, und die Feder (8) zwischen den Kettenhaltern (1) vorgesehen ist und koaxial mit den zwei Zugrahmen (7) verläuft, wobei jeweils gegenüberliegende Enden der Feder (8) gegen und zwischen inneren Flächen der Kettenhalter (1) angrenzen.

2. Zweiwegige stoßfeste und stoßabsorbierende Zugkupplung nach Anspruch 1, wobei zwei Kettenhalter (1) durch vier Paare von Kettenmitteln (2, 3, 3, 2) verbunden sind.

3. Zweiwegige stoßfeste und stoßabsorbierende Zugkupplung nach Anspruch 1, wobei wenigstens zwei Arme (9) eines der Zugrahmen (7) von Armen (9) eines anderen Zugrahmens (7) um einen Winkel von 90° beabstandet sind.

4. Zweiwegige stoßfeste und stoßabsorbierende Schlepperkupplung nach Anspruch 1, weiter eine Kolben-Manschettenanordnung enthaltend, bestehend aus einem Kolben (5), einer Manschette (6), wobei sich diese zwischen den Haltern erstreckt, wobei die Feder (8) im wesentlichen die Kolben-Manschettenanordnung umgibt.

## Revendications

1. Attelage de remorquage à deux voies résistant aux et absorbant les chocs, comprenant deux cadres de remorquage (7) destinés à être connectés à deux véhicules (A, B) adjacents, au moins un ressort de compression (8) et un boîtier logeant ledit ressort (8), caractérisé en ce que chacun desdits cadres de remorquage (7) comprend au moins deux bras (9) et ledit boîtier comprend deux organes de maintien de chaîne (1) mutuellement opposés, chaque organe de maintien de chaîne (1) présentant au moins quatre oreilles (10) espacées, au moins quatre couples de chaînes (2, 3, 3, 2), chaque couple de chaînes (2, 3, 3, 2) comprenant deux sections de chaîne (2, 3), chaque section de chaîne (2, 3) présentant une plaque de liaison (3) et une jonction (2) reliée par un axe de pivotement (4), les premières extrémités (2a) de chacune desdites sections de chaîne (2, 3) étant respectivement reliées à des oreilles (10) opposées, sur des organes de maintien de chaîne (1) par les axes de pivotement, les deuxièmes extrémités (3a) de chacune des sections de chaîne (2, 3) étant reliée pivotante à chacun desdits bras (9) et le ressort (8) étant prévu entre lesdits organes de maintien de chaîne (1) et coaxial
auxdits deux cadres de remorquage (7), les extrémités opposées dudit ressort (8) buttant respectivement contre et entre des surfaces intérieures desdits organes de maintien de chaîne (1).

2. Attelage de remorquage à deux voies résistant aux et absorbant les chocs selon la revendication 1, dans lequel lesdits deux organes de maintien de chaîne (1) sont reliés par quatre couples de chaînes (2, 3, 3, 2).

3. Attelage de remorquage à deux voies résistant aux et absorbant les chocs selon la revendication 1, dans lequel lesdits au moins deux bras (9) de l'un des cadres de remorquage (7) sont espacés d'un angle de 90° par rapport aux bras (7) d'un autre cadre de remorquage (7).

4. Attelage de remorquage à deux voies résistant aux et absorbant les chocs selon la revendication 1, comprenant en outre un ensemble piston manchon comportant un piston (5) et un manchon (6) et s'étendant entre lesdits supports, dans lequel ledit ressort (8) entoure sensiblement ledit ensemble piston manchon.
